# EUROPEAN PATENT APPLICATION

(11) **EP 4 375 332 A1**
(43) Date of publication of application: **29.05.2024**
(21) Application number: 22846232.1
(22) Date of filing: 20.07.2022
(51) Int. Cl.: C08L 79/08, C08K 5/54, C08G 73/10

(54) **POLYAMIC ACID COMPOSITION AND POLYIMIDE COATING MATERIAL COMPRISING SAME**

(30) Priority: 20.07.2021 KR 20210094985
(71) Applicant: PI Advanced Materials Co., Ltd., Chungcheongbuk-do 27818 (KR)
(72) Inventor: RO, Gyeong Hyeon, Gimhae-si Gyeongsangnam-do 51001 (KR); MOON, Gyeong Min, Suwon-si Gyeonggi-do 16650 (KR); LEE, Ik Sang, Gumi-si Gyeongsangbuk-do 39347 (KR)
(74) Representative: Murgitroyd & Company
(86) International application number: PCT/KR2022/010634
(87) International publication number: WO 2023/003362

(57) **Abstract**

The present invention relates to a polyamic acid composition for coating a conductor, and provides a polyamic acid composition for coating a conductor that prevents dielectric breakdown and partial discharge of a cured product while improving adhesion between a conductor and a coating material and flexibility of the coating material.

## Description

### [Technical field]

The present invention relates to a polyamic acid composition, a polyimide including the same, and a covering mate rial including the same.

### [Background Art]

An insulating layer (covering) covering a conductor is required to have excellent insulation, adhesion to the conductor, heat resistance, and mechanical strength.

In addition, in electrical devices with high applied voltage, such as motors used at high voltage, a high voltage is applied to an insulated wire constituting the electrical device, and thus a partial discharge (corona discharge) is likely to occur on the surface of the covering.

The occurrence of a corona discharge may cause a local temperature increase or the generation of ozone or ions, and as a result, the covering of the insulated wire may deteriorate, causing dielectric breakdown at an early stage and shortening the lifespan of the electrical device.

For the insulated wire used at high voltage, there is a need to improve the corona discharge initiation voltage for the above reasons, and it is known that lowering the dielectric constant of an insulating layer is effective for this purpose.

The resin forming the insulating layer above includes polyimide resin, polyamideimide resin, or polyesterimide resin.

In general, the polyimide resin refers to a highly heat-resistant resin prepared by solution polymerization of an aromatic dianhydride and an aromatic diamine or an aromatic diisocyanate to prepare a polyamic acid derivative, followed by ring closure dehydration at high temperature and imidization.

The polyimide resin is a material that has excellent heat resistance and a relatively low dielectric constant and has excellent properties for use as a covering material for conductors.

However, on the other hand, because the polyimide resin has a rigid structure, it is also true that it has a low tensile elongation at break and low flexibility, making it unfavorable for use as a covering material for conductors.

For example, in coils used in motors, in order to increase a space factor, processing may be performed to significantly deform an insulated wire, such as by winding the insulated wire to form a coil and then inserting the coil into a slot.

At this time, when the flexibility of an insulating layer is low, there is a risk that the covering may be damaged or cracks may occur during processing.

When the polyimide resin is prepared by reacting diamines and dianhydrides with flexible structures to improve flexibility, there is the problem is that heat resistance is lowered compared to polyimide resins that do not contain diamines or dianhydrides with flexible structures.

Therefore, there is a need to develop a technology that improves corona resistance while maintaining the adhesion between a conductor and a covering material and the flexibility of the covering material.

### [Disclosure]

### [Technical Problem]

The purpose of the present invention is to address the problems and technical problems of the related art as described above. The present application may improve the adhesion between a conductor and a covering material and flexibility of the covering material while preventing dielectric breakdown and partial discharge.

### [Technical Solution]

The present application relates to a polyamic acid composition. The polyamic acid composition may be applied to cover conductors. The polyamic acid composition for covering the conductor may include a polyamic acid having a dianhydride monomer component and a diamine monomer component as polymerization units. In addition, the diamine monomer component may include a compound of the following Chemical Formula 1. By including a diamine monomer with a specific structure, the present application may prevent dielectric breakdown and partial discharge while simultaneously implementing adhesion to the covering object and flexibility.

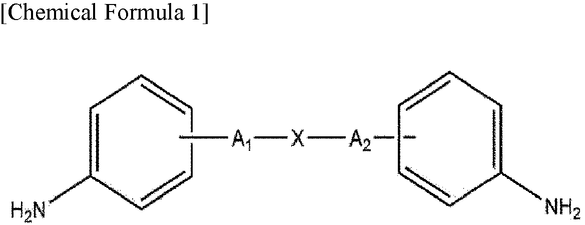

In Chemical Formula 1, A₁ and A₂ may each independently be an ether group, an ester group, or an amide group. A₁ and A₂ may be connected to the aromatic ring by removing one of the hydrogens of the aromatic ring. A₁ or A₂ may be connected to a meta or para position based on the amine group, considering the stereostructure. X may represent a single bond, an alkylene group, an alkylidene group, an aryl group, or the following Chemical Formula 2.

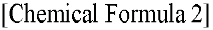

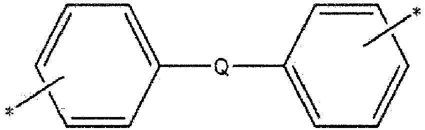

In Chemical Formula 2, Q may be oxygen, a carbonyl group, an alkylcarbonyl group, a single bond, an alkylene group, an alkylidene group, or a sulfone group. In Chemical Formula 2, "*" connected to the aromatic ring indicates a linker which connects the structure of Chemical Formula 2 to A₁ or A₂ of Chemical Formula 1 by removing one of the hydrogens of the aromatic ring. Considering the stereostructure, the linker may be connected to the meta or para position based on Q. Q may have an alkyl group, an alkenyl group, or an alkynyl group as a substituent. Alternatively, Q may have a fluorine-substituted alkyl group, an alkenyl group, or an alkynyl group as a substituent. In one example, when Q is an alkylene group, Q may have 1 or 2 alkyl groups, or 2 to 5 alkyl groups.

In the present specification, the term "single bond" may refer to a bond linking both atoms without any atoms. For example, in Chemical Formula 1, when X is a single bond, A₁ and A₂ may be directly connected to each other.

In the present specification, the term "alkyl group" may refer to a C1 to C30, C1 to C25, C1 to C20, C1 to C16, C1 to C12, C1 to C8, or C1 to C4 alkyl group, unless otherwise specified. The alkyl group may have a linear, branched or cyclic structure and may be optionally substituted by one or more substituents. The substituent may be, for example, a polar functional group.

In the present specification, the term "alkenyl group" may refer to a C1 to C30, C1 to C25, C1 to C20, C1 to C16, C1 to C12, C1 to C8, or C1 to C4 alkenyl group, unless otherwise specified. The alkenyl group may have a linear, branched or cyclic structure and may be optionally substituted with one or more substituents. The substituent may be, for example, a polar functional group.

In the present specification, the term "alkynyl group" may refer to a C1 to C30, C1 to C25, C1 to C20, C1 to C16, C1 to C12, C1 to C8, or C1 to C4 alkynyl group, unless otherwise specified. The alkynyl group may have a linear, branched or cyclic structure and may be optionally substituted with one or more substituents. The substituent may be, for example, a polar functional group.

In the present specification, the term "alkylene group" may refer to a C2 to C30, C2 to C25, C2 to C20, C2 to C16, C2 to C12, C2 to C10, or C2 to C8 alkylene group, unless otherwise specified. The alkylene group may have a linear, branched or cyclic structure and may be optionally substituted with one or more substituents. The substituent may be, for example, a polar functional group.

In the present specification, the term "alkylidene group" may refer to a C2 to C30, C2 to C25, C2 to C20, C2 to C16, C2 to C12, C2 to C10, or C2 to C8 alkylidene group, unless otherwise specified. The alkylidene group may have a linear, branched or cyclic structure and may be optionally substituted with one or more substituents. The substituent may be, for example, a polar functional group.

In one example, the compound of Chemical Formula 1 may be included in a ratio of 99 mol% or less of the diamine monomer components. In an embodiment, the compound of Chemical Formula 1 may be included in an amount of 95 mol% or less, 90 mol% or less, 85 mol% or less, 80 mol% or less, 75 mol% or less, 70 mol% or less, 65 mol% or less, 60 mol% or less, 55 mol% or less, 50 mol% or less, 45 mol% or less, 40 mol% or less, 38mol% or less, 35 mol% or less, 33 mol% or less, 31 mol% or less, 25 mol% or less, 20 mol% or less, or 14 mol% or less of the total diamine monomer components in the composition, and the lower limit may be, for example, 5 mol% or more, 8 mol% or more, 9 mol% or more, 10 mol% or more, 12 mol% or more, 15 mol% or more, 18 mol% or more, 20 mol% or more, 23 mol% or more, 25 mol% or more, 28 mol% or more, 33 mol% or more, 38 mol% or more, 43 mol% or more, 48 mol% or more, 53 mol% or more, 58 mol% or more, 63 mol% or more, or 68 mol% or more. By controlling the content range of the compound having the structure of Chemical Formula 1, the present application implements excellent heat resistance, electrical properties, flexibility, and adhesion to the adherend of the polyimide resin after polymerization.

In an embodiment of the present application, the diamine monomer component may further include a compound of the following Chemical Formula 3.

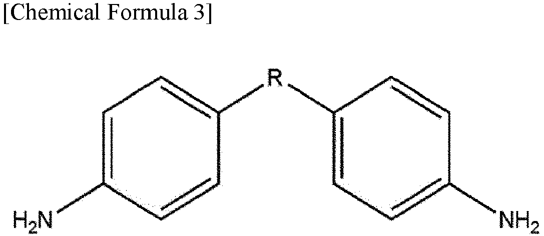

In Chemical Formula 3, R may represent a single bond, an ether group, an ester group, an amide group, a carbonyl group, an alkylcarbonyl group, an alkylene group, an alkylidene group, or an aryl group. The structure of Chemical Formula 3 has a structure excluding the compound having the structure of Chemical Formula 1 described above.

The compound of Chemical Formula 3 may be included in a ratio of 5 mol% or more of the diamine monomer components. In an embodiment, the compound of Chemical Formula 3 may be included in an amount of 10 mol% or more, 15 mol% or more, 20 mol% or more, 25 mol% or more, 30 mol% or more, 35 mol% or more, 40 mol% or more, 45 mol% or more, 50 mol% or more, 55 mol% or more, 60mol% or more, 63 mol% or more, 65 mol% or more, 68 mol% or more, 70 mol% or more, 80 mol% or more, 85 mol% or more, or 88 mol% or more of the total diamine monomer components in the composition, and the upper limit may be, for example, 95 mol% or less, 93 mol% or less, 91 mol% or less, 85 mol% or less, 80 mol% or less, 78 mol% or less, 75 mol% or less, 73 mol% or less, 71 mol% or less, 68 mol% or less, 63 mol% or less, 58 mol% or less, 53 mol% or less, 48 mol% or less, 43 mol% or less, 38 mol% or less, 33 mol% or less, or 28 mol% or less. In addition, the compound of Chemical Formula 1 may be in the range of 5 to 150 parts by weight based on 100 parts by weight of the compound of Chemical Formula 3, a lower limit of this range may be 7 parts by weight or more, 9 parts by weight or more, 10 parts by weight or more, 11 parts by weight or more, 15 parts by weight or more, 20 parts by weight or more, 25 parts by weight or more, 30 parts by weight or more, 33 parts by weight or more, 35 parts by weight or more, 38 parts by weight or more, 40 parts by weight or more, 42 parts by weight or more, 45 parts by weight or more, 50 parts by weight or more, 55 parts by weight or more, 60 parts by weight or more, 65 parts by weight or more, 70 parts by weight or more, 75 parts by weight or more, 80 parts by weight or more, 85 parts by weight or more, 90 parts by weight or more, 95 parts by weight or more, 100 parts by weight or more, or 105 parts by weight or more, and an upper limit may be, for example, 145 parts by weight or less, 140 parts by weight or less, 135 parts by weight or less, 130 parts by weight or less, 125 parts by weight or less, 120 parts by weight or less, 115 parts by weight or less, 110 parts by weight or less, 108 parts by weight or less, 103 parts by weight or less, 98 parts by weight or less, 93 parts by weight or less, 88 parts by weight or less, 83 parts by weight or less, 78 parts by weight or less, 73 parts by weight or less, 68 parts by weight or less, 63 parts by weight or less, 58 parts by weight or less, 53 parts by weight or less, 50 parts by weight or less, 48 parts by weight or less, 45 parts by weight or less, 43 parts by weight or less, 40 parts by weight or less, 37 parts by weight or less, 34 parts by weight or less, 31 parts by weight or less, 28 parts by weight or less, 23 parts by weight or less, 18 parts by weight or less, or 13 parts by weight or less. The polyamic acid resin according to the present application may impart corona resistance and improve the adhesion between a conductor and a covering material and flexibility of the covering material by using two or more types of diamines and by controlling the content ratio of each diamine.

The diamine monomer according to the present application is, for example, an aromatic diamine, and may be classified as follows.
1) A diamine having one benzene nucleus in its structure and a relatively rigid structure, such as 1,4-diaminobenzene (or p-phenylenediamine, PDA), 1,3-diaminobenzene, 2,4-diaminotoluene, 2,6-diaminotoluene, or 3,5-diaminobenzoic acid;
2) A diamine having two benzene nuclei in its structure, such as 4,4'-diaminodiphenylmethane (methylenediamine), 3,3'-dimethyl-4,4'-diaminobiphenyl, 2,2'-dimethyl-4,4'-diaminobiphenyl, 2,2'-bis(trifluoromethyl)-4,4'-diaminobiphenyl, 3,3'-dimethyl-4,4'-diaminodiphenylmethane, 3,3'-dicarboxy-4,4'-diaminodiphenylmethane, 3,3',5,5'-tetramethyl-4,4'-diaminodiphenylmethane, bis(4-aminophenyl)sulfide, 4,4'-diaminobenzanilide, 3,3'-dichlorobenzidine, 3,3'-dimethylbenzidine (or o-tolidine), 2,2'-dimethylbenzidine (or m-tolidine), 3,3'-dimethoxybenzidine, 2,2'-dimethoxybenzidine, 3,3'-diaminodiphenyl ether, 3,4'-diaminodiphenyl ether, 4,4'-diaminodiphenyl ether (or oxydianiline, ODA), 3,3'-diaminodiphenylsulfide, 3,4'-diaminodiphenylsulfide, 4,4'-diaminodiphenylsulfide, 3,3'-diaminodiphenylsulfone, 3,4'-diaminodiphenylsulfone, 4,4'-diaminodiphenylsulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 4,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenylsulfoxide, 3,4'-diaminodiphenylsulfoxide, 4,4'-diaminodiphenylsulfoxide, or 4,4'-(1,3-propanediyl)dioxydianiline(PDDA);
3) A diamine having three benzene nuclei in its structure, such as 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene (TPE-R), 1,4-bis(3-aminophenoxy)benzene (or TPE-Q), 1,4-bis(4-aminophenoxy)benzene (or TPE-Q), 1,3-bis(3-aminophenoxy)-4-trifluoromethylbenzene, 3,3'-diamino-4-(4-phenyl) phenoxybenzophenone, 3,3'-diamino-4,4'-di(4-phenylphenoxy)benzophenone, 1,3-bis(3-aminophenylsulfide)benzene, 1,3-bis(4-aminophenylsulfide)benzene, 1,4-bis(4-aminophenylsulfide)benzene, 1,3-bis(3-aminophenylsulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, 1,4-bis[2-(4-aminophenyl)isopropyl]benzene, or [3-(4-aminobenzoyl)oxyphenyl]-4-aminobenzoate (p-BABB);
4) A diamine having four benzene nuclei in its structure, such as 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl] ether, bis [3 -(4-aminophenoxy)phenyl] ether, bis[4-(3-aminophenoxy)phenyl] ether, bis[4-(4-aminophenoxy)phenyl] ether, bis[3-(3-aminophenoxy)phenyl] ketone, bis[3-(4-aminophenoxy)phenyl]ketone, bis[4-(3-aminophenoxy)phenyl] ketone, bis[4-(4-aminophenoxy)phenyl]ketone, bis[3-(3-aminophenoxy)phenyl] sulfide, bis [3-(4-aminophenoxy)phenyl] sulfide, bis[4-(3-aminophenoxy)phenyl] sulfide, bis[4-(4-aminophenoxy)phenyl] sulfide, bis[3-(3-aminophenoxy)phenyl] sulfone, bis [3-(4-aminophenoxy)phenyl] sulfone, bis[4-(3-aminophenoxy)phenyl] sulfone, bis [4-(4-aminophenoxy)phenyl] sulfone, bis[3-(3-aminophenoxy)phenyl] methane, bis [3-(4-aminophenoxy)phenyl] methane, bis[4-(3-aminophenoxy)phenyl] methane, bis [4-(4-aminophenoxy)phenyl] methane, 2,2-bis[3-(3-aminophenoxy)phenyl] propane, 2,2-bis[3-(4-aminophenoxy)phenyl]propane, 2,2-bis[4-(3-aminophenoxy)phenyl] propane, 2,2-bis[4-(4-aminophenoxy)phenyl]propane (BAPP), 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, or 2,2-bis[4-(4-aminophenoxy)phenyl]-1,1,1,3,3,3-hexafluoropropane.

Preferably, the compound of Chemical Formula 1 may be 4,4'-(1,3-propanediyl)dioxydianiline (PDDA), or [3-(4-aminobenzoyl)oxyphenyl]-4-aminobenzoate (p-BABB), and the compound of Chemical Formula 3 may be 4,4'-diaminodiphenyl ether (or oxydianiline, ODA).

Meanwhile, the dianhydride monomer included in the polyamic acid resin according to the present application may be an aromatic tetracarboxylic dianhydride. The dianhydride monomer component may have one aromatic ring or two or more aromatic rings. The upper limit of the number of aromatic rings may be, for example, 5.

The aromatic tetracarboxylic dianhydride may include, but is not limited to, pyromellitic dianhydride (or PMDA), 3,3',4,4'-biphenyltetracarboxylic dianhydride (or BPDA), 2,3,3',4'-biphenyltetracarboxylic dianhydride (or a-BPDA), oxydiphthalic dianhydride (or ODPA), diphenylsulfone-3,4,3',4'-tetracarboxylic dianhydride (or DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenonetetracarboxylic dianhydride, 3,3',4,4'-benzophenonetetracarboxylic dianhydride (or BTDA), bis(3,4-dicarboxyphenyl)methane dianhydride, 2,2-bis(3,4-dicarboxyphenyl)propane dianhydride, p-phenylenebis(trimellitic monoester acid anhydride), p-biphenylenebis(trimellitic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalenetetracarboxylic dianhydride, 1,4,5,8-naphthalenetetracarboxylic dianhydride, and 4,4'-(2,2-hexafluoroisopropylidene)diphthalic dianhydride.

Preferably, the aromatic tetracarboxylic dianhydride may be pyromellitic dianhydride (or PMDA).

In embodiments of the present application, the polyamic acid composition for covering a conductor may further include a silane compound. The silane compound may be, for example, one or more types selected from the group consisting of epoxy-based, amino-based, and thiol-based compounds, and it is also possible to mix two or more types. Specifically, the epoxy-based compound may include glycidoxypropyl trimethoxysilane (GPTMS), the amino-based compound may include (3-aminopropyl)trimethoxy-silane (APTMS), and the thiol-based compound may include mercapto-propyl-trimethoxysilane (MPTMS), but are not limited thereto. In addition, the silane compound may include an alkoxy silane compound exemplified by dimethyldimethoxysilane (DMDMS), methyltrimethoxysilane (MTMS), methyltriethoxysilane (MTES), or tetraethoxysilane (TEOS).

Preferably, the silane compound may be an amino-based silane compound.

The silane compound may be included in a range of 0.01 to 1 part by weight based on 100 parts by weight of the polyamic acid. In an embodiment, a content ratio of the silane compound may be 0.03 parts by weight or more, 0.05 parts by weight or more, 0.08 parts by weight or more, 0.1 parts by weight or more, 0.15 parts by weight or more, or 0.18 parts by weight or more, based on 100 parts by weight of the polyamic acid, and an upper limit may be, for example, 0.8 parts by weight or less, 0.5 parts by weight or less, 0.3 parts by weight or less, 0.23 parts by weight or less, or 0.15 parts by weight or less. By including the silane compound, the present application improves adhesion to the adherend while maintaining electrical properties with the polyamic acid resin having the above-described specific structure.

The polyamic acid composition according to the present application may have a solid content in the range of 10 to 50 wt%. The solid content may be 13 wt% or more, 15 wt% or more, 18 wt% or more, 20 wt% or more, 25 wt% or more, or 28 wt% or more, and an upper limit may be, for example, 48 wt% or less, 45 wt% or less, 43 wt% or less, 40 wt% or less, 38 wt% or less, 35 wt% or less, 33 wt% or less, or 30 wt% or less. The present application can implement the desired physical properties and viscosity within the above range.

In the present application, the polyamic acid composition may include a first solvent that is an organic solvent.

The organic solvent is not particularly limited as long as it is an organic solvent capable of dissolving polyamic acid, but may be, for example, an aprotic polar solvent.

The aprotic polar solvent may include, for example, amide-based solvents such as N,N'-dimethylformamide (DMF), N,N'-diethylformamide (DEF), N,N'-dimethylacetamide (DMAc), dimethylpropanamide (DMPA); phenol-based solvents such as p-chlorophenol or o-chlorophenol; N-methyl-pyrrolidone (NMP), gamma butyrolactone (GBL), and diglyme, and these solvents may be used alone or in combination of two or more.

In one embodiment, the dianhydride monomer may include a monomer having an unpolymerized ring-opened structure in addition to the monomer included in the polymerization unit. That is, some of the dianhydride monomers may be included in the polymerization unit, and some may not be included in the polymerization unit, and the dianhydride monomer not included in the polymerization unit may have a ring-opened structure by the organic solvent according to the present application. The polyamic acid composition according to the present application may be present in the form of an aromatic carboxylic acid having two or more carboxylic groups in a state in which the dianhydride monomer is not polymerized, and the aromatic carboxylic acid may be present as a monomer before curing to lower the viscosity of the entire polyamic acid composition and improve processability. The aromatic carboxylic acid having two or more carboxylic groups is polymerized into a dianhydride monomer in a main chain after curing, thereby increasing an overall polymer chain length, and such a polymer can be applied to the covering material to realize excellent heat resistance, dimensional stability, and mechanical properties.

Specifically, when the polyamic acid composition is subjected to heat treatment for imidization into a polyimide, the aromatic carboxylic acid having two or more carboxylic groups can react with a terminal amine group of a polyamic acid chain or a polyimide chain by becoming dianhydride monomers through a ring-closing dehydration reaction, thereby increasing the polymer chain length, which can improve the dimensional stability and high-temperature thermal stability of a prepared polyimide film, and improve mechanical properties at room temperature.

In one example, as described above, the polyamic acid composition of the present application may include a second solvent, and the second solvent may be included in an amount of 0.01% by weight to 10% by weight in the entire polyamic acid composition. A lower limit of the content of the second solvent may be, for example, 0.015% by weight, 0.03% by weight, 0.05% by weight, 0.08% by weight, 0.1% by weight, 0.3% by weight, 0.5% by weight, 0.8% by weight, 1% by weight, or 2% by weight or more, and an upper limit may be, for example, 10% by weight, 9% by weight, 8% by weight, 7% by weight, 6% by weight, 5.5% by weight, 5.3% by weight, 5% by weight, 4.8% by weight, 4.5% by weight, 4% by weight, 3% by weight, 2.5% by weight, 1.5% by weight, 1.2% by weight, 0.95% by weight, or 0.4% by weight or less. In addition, the first solvent may be included in an amount of 60 to 95% by weight in the entire polyamic acid composition. A lower limit of the content of the first solvent may be, for example, 65% by weight, 68% by weight, 70% by weight, 73% by weight, 75% by weight, 78% by weight, or 80% by weight or more, and an upper limit may be, for example, 93% by weight, 90% by weight, 88% by weight, 85% by weight, 83% by weight, 81% by weight, or 79% by weight or less. The polyamic acid composition according to the present application includes a dianhydride monomer component and a diamine monomer component, wherein the two monomers constitute polymerization units that are polymerized with each other, but some of the dianhydride monomers are ring-opened by the organic solvent, so they cannot participate in the polymerization reaction. An unpolymerized ring-opened dianhydride monomer acts as a diluting monomer and can control the viscosity of the entire polyamic acid composition to be relatively low. The dianhydride monomer having the ring-opened structure participates in the imidization reaction and may produce a polyimide that has heat resistance, flexibility, low dielectric properties, and adhesion as the desired covering material.

In one example, the second solvent may dissolve less than 1.5 g/100 g of the dianhydride monomer. That is, the second solvent may have a solubility of less than 1.5 g/100 g for the dianhydride monomer. An upper limit of the solubility range may be, for example, 1.3 g/100 g, 1.2 g/100 g, 1.1 g/100 g, 1.0 g/100 g, 0.9 g/100 g, 0.8 g/100 g, 0.7 g/100 g, 0.6 g/100 g, 0.5 g/100 g, 0.4 g/100 g, 0.3 g/100 g, 0.25 g/100 g, 0.23 g/100 g, 0.21 g/100 g, 0.2 g/100 g, or 0.15 g/100 g or less, and a lower limit may be, for example, 0 g/100 g, 0.01 g/100 g, 0.05 g/100 g, 0.08 g/100 g, 0.09 g/100 g, or 0.15 g/100 g or more. The present application may provide a polyamic acid composition having desired physical properties by including a second solvent having low solubility for a dianhydride monomer included as a polymerization unit or an unpolymerized dianhydride monomer. When the properties measured in the present application are properties that are affected by temperature, they may be measured at room temperature (23 °C), unless otherwise specified.

In an embodiment of the present application, the first solvent may have, for example, a solubility of 1.5 g/100 g or more for the dianhydride monomer. A lower limit of the solubility range may be, for example, 1.6 g/100 g, 1.65 g/100 g, 1.7 g/100 g, 2 g/100 g, 2.5 g/100 g, 5 g/100 g, 10 g/100 g, 30 g/100 g, 45 g/100 g, 50 g/100 g, or 51 g/100 g or more, and an upper limit may be, for example, 80 g/100 g, 70 g/100 g, 60 g/100 g, 55 g/100 g, 53 g/100 g, 48 g/100 g, 25 g/100 g, 10 g/100 g, 5 g/100 g, or 3 g/100 g or less. The first solvent may have higher solubility than the second solvent.

In one example, a boiling point of the first solvent may be 150 °C or higher, and a boiling point of the second solvent may be lower than that of the first solvent. That is, the boiling point of the first solvent may be higher than that of the second solvent. A boiling point of the second solvent may be in a range of 30 °C or more and less than 150 °C. A lower limit of the boiling point of the first solvent may be, for example, 155 °C, 160 °C, 165 °C, 170 °C, 175 °C, 180 °C, 185 °C, 190 °C, 195 °C, 200 °C, or 201 °C or more, and an upper limit may be, for example,500 °C, 450 °C, 300 °C, 280 °C, 270 °C, 250 °C, 240 °C, 230 °C, 220 °C, 210 °C, or 205 °C or less. A lower limit of the boiling point of the second solvent may be, for example, 35 °C, 40 °C, 45 °C, 50 °C, 53 °C, 58 °C, 60 °C, or 63 °C or more, and an upper limit may be, for example, 148 °C, 145 °C, 130 °C, 120 °C, 110 °C, 105 °C, 95 °C, 93 °C, 88 °C, 85 °C, 80 °C, 75 °C, 73 °C, 70 °C, or 68 °C or less. In the present application, polyimide having desired physical properties can be prepared using two solvents having different boiling points.

The first solvent according to the present application is not particularly limited as long as it is a solvent capable of dissolving polyamic acid. The first solvent may also be a polar solvent. For example, the first solvent may be an amide solvent such as N,N-dimethylformamide, N,N-dimethylacetamide, or N-methylpyrrolidone. For example, the first solvent may have an amide group or a ketone group in its molecular structure. The first solvent may have a lower polarity than the second solvent.

As one example, the first solvent may be an aprotic polar solvent. The second solvent may be an aprotic polar solvent or a protic polar solvent. Examples of the second solvent may include alcohol-based solvents such as methanol, ethanol, 1-propanol, butyl alcohol, isobutyl alcohol, and 2-propanol; ester-based solvents such as methyl acetate, ethyl acetate, and isopropyl acetate; carboxylic acid solvents such as formic acid, acetic acid, propionic acid, butyric acid, and lactic acid; ether-based solvents such as dimethyl ether, diethyl ether, diisopropyl ether, and dimethoxyethane methyl t-butyl ether; and dimethyl carbonate, metal methacrylate, or propylene glycol monomethyl ether acetic acid.

As described above, in the present application, the first solvent and the second solvent may be included together. In this case, the first solvent may be included in a greater amount than the second solvent. In addition, the second solvent may be included in an amount of 0.01 to 10 parts by weight based on 100 parts by weight of the first solvent. A lower limit of the content ratio may be, for example, 0.02 parts by weight, 0.03 parts by weight, 0.04 parts by weight, 0.1 parts by weight, 0.3 parts by weight, 0.5 parts by weight, 0.8 parts by weight, 1 part by weight, or 2 parts by weight or more, and an upper limit may be, for example, 8 parts by weight, 6 parts by weight, 5 parts by weight, 4.5 parts by weight, 4 parts by weight, 3 parts by weight, 2.5 parts by weight, 1.5 parts by weight, 1.2 parts by weight, 0.95 parts by weight, 0.4 parts by weight, 0.15 parts by weight, or 0.09 parts by weight or less.

The polyamic acid composition of the present application may be a composition having low viscosity characteristics. The polyamic acid composition of the present application may have a viscosity of 10,000 cP or less, or 9,000 cP or less, as measured at a temperature of 23 °C and a shear rate of 1 s⁻¹. The lower limit is not particularly limited but may be 500 cP or more or 1,000 cP or more. The viscosity may be measured, for example, using Rheostress 600 manufactured by Haake GmbH, and may be measured at a shear rate of 1/s, a temperature of 23 °C, and a plate gap of 1 mm. The present application provides a precursor composition with excellent processability by adjusting the viscosity range and may form a covering material with desired physical properties when covering conductor wires.

In one specific example, the polyamic acid may have a molecular weight in a range of 10,000 to 50,000 g/mol or 15,000 to 30,000 g/mol. The term "weight average molecular weight" means a conversion value with respect to standard polystyrene or polymethyl methacrylate (PMMA) as measured by gel permeation chromatography (GPC).

In one example, the polyamic acid composition may have a dielectric constant (Dk) of less than 3.6 in the 10 GHz frequency band after curing. The lower limit of the dielectric constant after curing is not particularly limited, but for example, may be 1.0 or more, and an upper limit may be 3.58 or less, 3.55 or less, 3.53 or less, 3.5 or less, 3.48 or less, 3.45 or less, or 3.42 or less. The polyimide resin obtained by curing the polyamic acid composition of the present application has a low dielectric constant, especially in the high frequency band, and thus may have excellent dielectric properties.

In one example, in order to indirectly measure the properties of the covering material, the present application can evaluate the elongation after preparing the polyamic acid composition into a polyimide film with a thickness of any one of 15 to 40 µm or about 25 µm. An elongation after curing of the polyamic acid composition may be 70% or more, and in an embodiment, 72% or more, 73% or more, 75% or more, 78% or more, 80% or more, 83% or more, 85% or more, 87% or more, 90% or more, 93% or more, 100% or more, 110% or more, 120% or more, 130% or more, or 140% or more. An upper limit may be, for example, 150% or less, 148% or less, 145% or less, 140% or less, 130% or less, 120% or less, 110% or less, 100% or less, 98% or less, 95% or less, 90% or less, 85% or less, or 80% or less. These mechanical properties may appear similarly to the covering material covering the electrical wire as described above.

In one example, the polyamic acid composition may have an adhesive strength to copper of 0.65 N/cm or more after curing. The adhesive strength may be measured after preparing the polyamic acid composition in the form of a film (width 10 mm x height 50 mm x thickness 20 µm). The adhesive strength may be measured at a temperature of 23 °C, a peeling angle of 180°, and a peeling rate of 20 mm/min.

In an embodiment of the present application, the polyamic acid composition may have a partial discharge inception voltage (PDIV) of 800 Vp or more as measured according to the ASTM 2275-01 standard after curing. In an embodiment, the lower limit of the partial discharge inception voltage may be 800 Vp or more, 820 Vp or more, 830 Vp or more, or 850 Vp or more, and an upper limit may be 1000 Vp or 950 Vp or less. In addition, the polyamic acid may have a breakdown voltage (BDV) of 230 kV/mm or more as measured according to the ASTMD149 standard after curing. A lower limit of the breakdown voltage may be 233 kV/mm or more, 235 kV/mm or more, 238 kV/mm or more, 240 kV/mm or more, 243 kV/mm or more, 244 kV/mm or more, 245 kV/mm or more, 246 kV/mm or more, 247 kV/mm or more, 248 kV/mm or more, or 249 kV/mm or more, and an upper limit may be, for example, 300 kV/mm or less, 290 kV/mm or less, 280 kV/mm or less, 270 kV/mm or less, 265 kV/mm or less, or 260 kV/mm or less. The polyamic acid composition of the present application may provide a polyimide that may simultaneously satisfy a low dielectric constant, heat resistance, insulation, adhesion, and mechanical properties at high temperatures after curing by including the above monomers, and through this, when used to cover electrical wires, it is possible to provide a highly reliable covering material by preventing partial discharge, local deterioration, and dielectric breakdown.

The breakdown voltage (BDV) may be measured by a method known in the art. In one example, the breakdown voltage may be measured according to the ASTMD149 standard. An electrical wire coated with the polyamic acid composition may be manufactured as a specimen, and the measuring equipment TECHNOLOGIES 6CCE50-5 from Phenix Technologies may be used. After pre-treating the manufactured specimen in an oven at 100 °C to remove moisture, the specimen is fixed to the measuring equipment set to an atmosphere at room temperature, and the BDV may be measured by applying a voltage of 10 KVAc to lower and upper electrodes and increasing an alternating current voltage at a constant rate from 0.

In addition, the partial discharge inception voltage (PDIV) may be measured using a method known in the art. The partial discharge inception voltage is generated, for example, by applying a load and twist to the ends of a pair of specimens of the manufactured insulated wire according to the ASTM 2275-01 standard, thereby fabricating a sample twisted in two lines. Afterward, a voltage with a frequency of 50 to 60 Hz is applied at a constant rate to the bare conductors at both ends of the sample, and the voltage at which partial discharge (100 pC or more) occurs is recorded.

The present application also relates to a method of preparing a polyamic acid composition. The preparation method may be a method of preparing the polyamic acid composition described above.

The method of preparing the polyamic acid composition may include the step of inputting at least one of a dianhydride monomer and a diamine monomer two or more times in a divided manner.

The polyamic acid composition may be prepared by polymerizing a dianhydride monomer and a diamine monomer in an organic solvent.

In addition, the dianhydride monomer and diamine monomer may be input in the form of powder, a lump, and a solution, and at the beginning of the reaction, it is preferable to input them in powder form to proceed with the reaction and to add them in solution form to adjust the polymerization viscosity.

For example, a dianhydride monomer and a diamine monomer may be input in powder form to proceed with the reaction, and then a dianhydride monomer may be input in the form of a solution to react until the viscosity of the polyamic acid composition reaches a certain range.

Meanwhile, the present invention provides a method of preparing the polyamic acid composition, the method including inputting at least one of a dianhydride monomer and a diamine monomer into an organic solvent and dissolving them, and inputting at least one of the dianhydride monomer and the diamine monomer into the organic solvent two or more times in a divided manner to polymerize the polyamic acid and stirring the same.

The equivalent ratio of the diamine monomer to the dianhydride monomer may be adjusted through a process of inputting the dianhydride monomer and the diamine monomer in a divided manner.

Specifically, at least one of the dianhydride monomer and the diamine monomer may be inputted at least two to five times in a divided manner.

The present application also relates to a polyimide, which is a cured product of the polyamic acid composition. The polyimide may be a polyimide covering material. In one example, the polyimide may be a cured product of the polyamic acid composition described above or a precursor composition prepared by the preparation method.

In addition, the present application relates to a covering material. The covering material may include the polyimide, which is a cured product of the polyamic acid composition described above. The covering material may be applied and cured, for example, on the surface of a conductor. In one example, a method of obtaining the covering material may include applying a polyamic acid composition on a surface of a conductor; and imidizing the polyamic acid composition applied on the surface of the conductor. Although the conductor may be a copper wire made of copper or a copper alloy, conductors made of other metal materials such as a silver wire or various metal-plated wires such as aluminum- or a tin-plated wire, may also be included as the conductor. The thickness of the conductor and covering material may conform to KSC 3107 standards. The diameter of the conductor may be in the range of 0.3 to 3.2 mm, and a standard film thickness (average value of a maximum film thickness and a minimum film thickness) of the covering material may be 21 to 194 µm for type 0, 14 to 169 µm for type 1, and 10 to 31 µm for type 2. A cross-sectional shape of the conductor may be a round wire, a flat wire, a hexagonal wire, or the like, but is not limited thereto.

The present application may also provide a covered electrical wire including a polyimide covering material prepared by covering the polyamic acid composition on the surface of the electrical wire and imidizing it. In one embodiment, the covered electrical wire may include an electrical wire; and an imidized covering material in which the above-mentioned polyamic acid composition is covered on the surface of the electrical wire.

In addition, the present application may provide an electronic device including the covered electrical wire. The electronic device may be, for example, an electric motor.

### [Advantageous Effects]

As described above, the present application can provide a highly reliable insulated wire that can prevent dielectric breakdown and partial discharge while improving the adhesion between a conductor and a covering material and flexibility of the covering material.

### [Best Mode for Implementation of the Invention]

Hereinafter, the present invention will be described in more detail through examples according to the present invention and comparative examples not according to the present invention, but the scope of the present invention is not limited by the examples presented below.

### <Example 1>

Dimethylacetamide was input as a solvent to a 1 L reactor under a nitrogen atmosphere.

After setting the temperature to 23 to 50 °C, 95 parts by weight of pyromellitic dianhydride (PMDA) was input as a dianhydride monomer, 90 parts by weight of 4,4'-diaminodiphenyl ether (4,4'-ODA) and 10 parts by weight of 4,4'-(1,3-propanediyl)dioxydianiline (PDDA) were input as diamine monomers and dissolved, and 5 parts by weight of the pyromellitic dianhydride (PMDA) was input three times at 30-minute intervals to polymerize a polyamic acid.

0.2 parts by weight of an amino silane compound PAPTES (DOW Z-6883 silane) as a silane compound was mixed into the prepared polyamic acid composition to prepare a polyamic acid composition.

### <Example 2>

A polyamic acid composition was prepared in the same manner as in Example 1, except that 70 parts by weight of 4,4'-ODA and 30 parts by weight of 4,4'-(1,3-propanediyl)dioxydianiline (PDDA) were input as diamine monomers.

### <Example 3>

A polyamic acid composition was prepared in the same manner as in Example 2, except that a silane compound was not added.

### <Example 4>

A polyamic acid composition was prepared in the same manner as in Example 3, except that 30 parts by weight of [3-(4-aminobenzoyl)oxyphenyl] 4-aminobenzoate (p-BABB) was used as a diamine monomer instead of 4,4'-(1,3-propanediyl)dioxydianiline (PDDA).

### <Comparative Example 1>

A polyamic acid composition was prepared in the same manner as in Example 1, except that 100 parts by weight of 4,4'-ODA alone was input as a diamine monomer and dissolved, and 100 parts by weight of PMDA was added as a dianhydride monomer.

### <Comparative Example 2>

A polyamic acid composition was prepared in the same manner as in Comparative Example 1, except that a silane compound was not added.

### <Comparative Example 3>

A polyamic acid composition was prepared in the same manner as in Example 2, except that 30 parts by weight of 4,4'-diaminobenzanilide (DABA) was used as a diamine monomer instead of 4,4'-(1,3-propanediyl)dioxydianiline (PDDA).

### <Comparative Example 4>

A polyamic acid composition was prepared in the same manner as in Comparative Example 2, except that 70 parts by weight of PMDA and 30 parts by weight of 3,3',4,4'-biphenyltetracarboxylic dianhydride (BPDA) were input as dianhydride monomers instead of 100 parts by weight of PMDA.

### <Comparative Example 5>

A polyamic acid composition was prepared in the same manner as in Comparative Example 2, except that 70 parts by weight of PMDA and 30 parts by weight of 3,3',4,4'-benzophenone tetracarboxylic dianhydride (BTDA) were input as dianhydride monomers instead of 100 parts by weight of PMDA.

### Preparation of polyimide covering material

The polyamic acid composition prepared in the above Examples and Comparative Examples was covered on a copper wire with a conductor diameter of 1 mm in a covering curing furnace, here, in which a covering thickness was adjusted to between 5 and 15 µm per cover, the lowest and highest temperatures of the covering curing furnace were adjusted to 350 to 550 °C, and the covering speed of the copper wire was adjusted to 12 to 32 m/min, thereby manufacturing an electrical wire (covered electrical wire) including a polyimide covering material with a covering thickness of 33 to 35 µm.

### <Experimental Example 1: Adhesive strength>

A copper foil was cut to a certain size and fixed on a glass substrate with an adhesive tape. The polyamic acid composition prepared in each of the Examples and Comparative Examples was applied on the Cu foil and spin-coated to form a thin film with a certain thickness (width 10 mm x height 50 mm x thickness 20 µm). The applied polyamic acid composition was cured and a cured polyimide material was coated on the Cu foil.

Peel strength (UTM) was measured by peeling the Cu foil layer and the cured polyimide material layer. After fixing the cured polyimide material layer to an upper grip and the copper foil (Cu foil) layer to a lower grip, adhesive strength was measured by applying force at a peeling angle of 180° and a peeling rate of 20 mm/min at a room temperature of 23 °C.

### <Experimental Example 2: Pull test>

A pull test was performed on the polyimide covering material prepared in each of the Examples and Comparative Examples to confirm the adhesion between a conductor and a covering material, and the results are shown in Table 1 below.

Specifically, for a straight wire specimen with a freely measured length of 200 to 250 mm, only the covering material was cut with a knife in the center (cutting only the covering material, excluding the copper wire). Both ends of the specimen were pulled and stretched 15%.

A length of the gap created by the cut portion opening of the covering material was measured.

### <Experimental Example 3: Elongation>

The polyamic acid composition prepared in each of the Examples and Comparative Examples was formed into a film and cured.

After cutting a polyimide film to a width of 10 mm and a length of 50 mm, elongation was measured by the ASTM D-882 method using the Instron5564 UTM equipment from Instron Corp.

### <Experimental Example 4: Dielectric constant measurement>

The dielectric constant at 10 GHz of the polyimide covering materials prepared in the Examples and Comparative Examples was measured at 23 °C and 50% RH using a Network analyzer EVA Vector Network Analyzer (E5063A, Keysight).

### <Experimental Example 5: Breakdown voltage (BDV) evaluation>

The BDV values of the polyimide covering materials prepared in the Examples and Comparative Examples were measured according to the ASTMD149 standard.

### Measuring equipment: TECHNOLOGIES 6CCE50-5 from Phenix Technologies

After pre-treating the manufactured specimen in an oven at 100 °C to remove moisture, the specimen was fixed to the measuring equipment set to an atmosphere at room temperature, and the BDV was measured by applying a voltage of 10 KVAc to the lower and upper electrodes and increasing the voltage at a constant rate from 0.

### <Experimental Example 6: Partial discharge inception voltage (PDIV) evaluation>

A voltage with a 60 Hz sine wave was applied to the polyimide covering material according to each of the Examples and Comparative Examples at room temperature, and the voltage at which partial discharge was initiated was measured. Here, when the applied voltage was increased, the voltage at which a charge of 100 pC or more was detected was measured.

### <Experimental Example 7: Film defect evaluation>

Film defect evaluation was performed on the polyimide covering material according to each of the Examples and Comparative Examples according to standard JIS C 3003, section 7.1.2. Specifically, when a crack occurs in three specimens bent with a mandrel with a diameter (3W) three times the conductor width (W) and three specimens bent with a mandrel with a diameter (3T) three times the conductor height (T), the specimens do not meet the standard (fail).

**[Table 1]**

| | Adhesive strength (N/cm) | Pull test (mm) | Elongation (%) | Dielectric constant | BDV (kV/mm) | PDIV (Vp) | Covering appearance |
|---|---|---|---|---|---|---|---|
| Example 1 | 0.7 | <3 | 73 | 3.5 | 250 | >850 | Good |
| Example 2 | 0.9 | <2 | 93 | 3.4 | 245 | >850 | Good |
| Example 3 | 0.7 | <3 | 87 | 3.4 | 248 | >850 | Good |
| Example 4 | 0.8 | <3 | 144 | 3.5 | 250 | >850 | Good |
| Comparative Example 1 | 0.6 | >5 | 85 | 3.5 | 266 | >850 | Good |
| Comparative Example 2 | 0.5 | >5 | 79 | 3.6 | 268 | >850 | Good |
| Comparative Example 3 | 0.7 | - | 50 | - | 220 | - | Good |
| Comparative Example 4 | 0.8 | <3 | 79 | 3.6 | 240 | >850 | Good |
| Comparative Example 5 | 0.8 | <3 | 60 | 3.6 | 240 | >850 | Good |

## Claims

1. A polyamic acid composition for covering a conductor, comprising a polyamic acid having a dianhydride monomer component and a diamine monomer component as polymerization units,
wherein the diamine monomer component includes a compound of the following Chemical Formula 1: 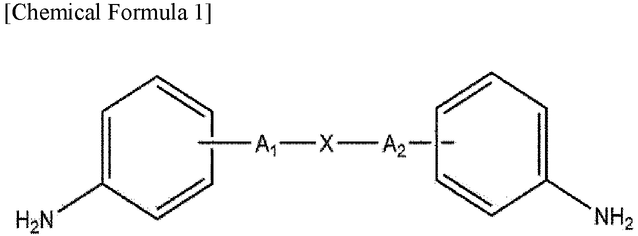
in Chemical Formula 1, A₁ and A₂ are each independently an ether group, an ester group, or an amide group, and X represents a single bond, an alkylene group, an alkylidene group, an aryl group, or the following Chemical Formula 2, 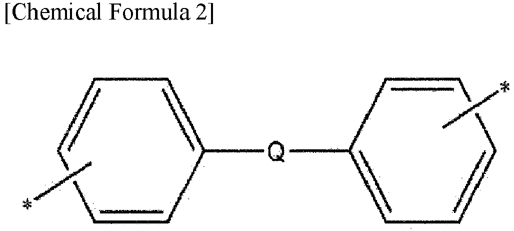
in Chemical Formula 2, Q is oxygen, a carbonyl group, an alkylcarbonyl group, a single bond, an alkylene group, an alkylidene group, or a sulfone group.

2. The polyamic acid composition of claim 1, wherein the compound of Chemical Formula 1 is included in a proportion of 99 mol% or less in the diamine monomer component.

3. The polyamic acid composition of claim 1, wherein the diamine monomer component includes a polyamic acid further including a compound of the following Chemical Formula 3: 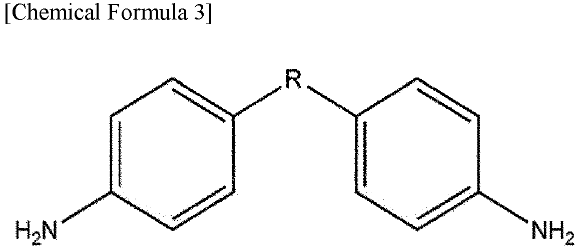 in Chemical Formula 3, R represents a single bond, an ether group, an ester group, an amide group, a carbonyl group, an alkylcarbonyl group, an alkylene group, an alkylidene group, or an aryl group.

4. The polyamic acid composition of claim 3, wherein the compound of Chemical Formula 3 is included in a proportion of 5 mol% or more in the diamine monomer component.

5. The polyamic acid composition of claim 3, wherein the compound of Chemical Formula 1 is included in a range of 5 to 150 parts by weight based on 100 parts by weight of the compound of Chemical Formula 3.

6. The polyamic acid composition of claim 1, wherein the dianhydride monomer component has one or two or more aromatic rings.

7. The polyamic acid composition of claim 1, further comprising a silane compound.

8. The polyamic acid composition of claim 7, wherein the silane compound is included in a range of 0.01 to 1 part by weight based on 100 parts by weight of the polyamic acid.

9. The polyamic acid composition of claim 1, wherein a solid content is in a range of 10 to 50% by weight.

10. The polyamic acid composition of claim 1, further comprising a first solvent that is an organic solvent.

11. The polyamic acid composition of claim 1, having a dielectric constant (Dk) of less than 3.6 in the 10 GHz frequency band after curing.

12. The polyamic acid composition of claim 1, wherein an elongation measured after curing is 70% or more.

13. The polyamic acid composition of claim 1, wherein an adhesive strength to copper after curing is 0.65 N/cm or more.

14. The polyamic acid composition of claim 1, wherein a partial discharge inception voltage (PDIV) is 800 Vp or more as measured according to the ASTM 2275-01 standard after curing.

15. The polyamic acid composition of claim 1, wherein a breakdown voltage (BDV) measured according to the ASTMD149 standard after curing is 230 kV/mm or more.

16. A polyimide covering material comprising a cured product of the polyamic acid composition for covering the conductor of claim 1.

17. An electrical wire comprising the polyimide covering material of claim 16.

18. An electronic device comprising the electrical wire of claim 17.
